# DEMANDE DE BREVET EUROPEEN

(11) **EP 4 624 377 A2**
(43) Date de publication de la demande: **01.10.2025**
(21) Numéro de dépôt: 25195812.0
(22) Date de dépôt: 17.09.2021
(51) Int. Cl.: B65G 1/04

(54) **PROCÉDÉ DE MISE EN OEUVRE D'UN SYSTÈME DE PRÉPARATION DE COMMANDES OU DE STOCKAGE TAMPON**

(30) Priorité: 18.09.2020 FR 2009462
(62) Demande divisionnaire de: 21773124.9
(71) Demandeur: Exotec Product France, 59170 Croix (FR)
(72) Inventeur: MOULIN, Romain, 59800 LILLE (FR); HEITZ, Romain, 59650 VILLENEUVE D'ASCQ (FR)
(74) Mandataire: Plasseraud IP

(57) **Abrégé**

L'invention concerne un système de préparation de commandes comprenant :
- des rayonnages délimitant une allée ;
- un chariot à guidage automatique comprenant des moyens de grimpe comprenant quatre roues dentées destinées chacune à coopérer avec des crémaillères ou des chaînes solidarisées auxdits montants, chacune des roues dentées étant montée sur un support mobile par rapport au châssis dudit chariot entre une position déployée et une position escamotée.

Selon l'invention, la largeur ou la longueur dudit chariot est inférieure à l'espacement entre les montants de ladite première paire de montant ou de ladite deuxième paire de montants, et ledit support mobile est configuré de sorte que, dans ladite position déployée, au moins une partie de chacune desdites roues dentées fait également saillie hors d'un bord dudit châssis faisant face à ladite allée.

## Description

### 1. Domaine de l'invention

Le domaine de l'invention est celui de la logistique en entrepôt et en particulier de la manutention, du stockage et du transport de pièces ou de produits.

Plus précisément, l'invention concerne un système de préparation de commandes ou de stockage tampon.

L'invention trouve notamment une application dans l'automatisation de la gestion des flux d'un entrepôt de stockage, par exemple dans un entrepôt de préparation de commandes d'une chaîne logistique, ou dans l'automatisation d'un service de livraison de commandes en point-retrait, communément appelé « drive ».

### 2. Etat de la technique

Dans la chaîne logistique globale, la gestion des flux et la manipulation des produits au sein d'un entrepôt jouent un rôle déterminant.

Traditionnellement, un préparateur de commandes se déplace dans l'entrepôt pour collecter chaque produit d'une commande à son emplacement sur une étagère d'un rayonnage.

On constate qu'une telle organisation implique que le préparateur parcoure de longs trajets au cours d'une journée de travail, ce qui occasionne fatigue et perte de temps lorsque le trajet n'est pas optimisé.

Un autre inconvénient est que le préparateur doit parfaitement connaître l'agencement de l'entrepôt pour ne pas perdre de temps.
Pour limiter la fatigue due aux déplacements, améliorer la gestion de la cueillette (ou « picking » en anglais), réduire le temps de préparation des commandes et son coût, on a imaginé une organisation des entrepôts où les produits sont prélevés dans les rayonnages par des robots puis acheminés par ces mêmes robots jusqu'à des postes de préparation de commandes.

On a notamment proposé de mettre en œuvre des chariots autoguidés qui sont à la fois capables de rouler sur le sol et de grimper le long des rayonnages pour aller prélever des produits stockés dans des bacs.

On connaît ainsi, par exemple, du document WO 2010/100513 A2 un robot équipé sur les côtés de son châssis de roues dentées rétractables pouvant se déployer latéralement. Ces roues dentées sont destinées à s'engrener sur des crémaillères verticales fixées à des rayonnages, pour permettre au robot de s'élever entre deux rayonnages afin de parvenir jusqu'au niveau d'un bac à prélever.

Un inconvénient de cette technique connue de robot est que, dans la zone des rayonnages, les robots ne peuvent circuler au sol qu'entre les rayonnages, ce qui peut créer des engorgements et ralentit le flux de préparation des commandes.

### 3. Objectifs de l'invention

L'invention a donc notamment pour objectif de pallier les inconvénients de l'état de la technique cités ci-dessus.

Plus précisément, l'invention a pour objectif de fournir une technique de préparation de commandes qui permette d'optimiser les flux de circulation des marchandises à l'intérieur d'un entrepôt.

Un autre objectif de l'invention est de fournir une technique de préparation de commandes qui soit simple à mettre en œuvre et peu coûteuse.

Un objectif de l'invention est également de fournir une technique de préparation de commandes s'adaptant à des rayonnages existants.

### 4. Exposé de l'invention

Ces objectifs, ainsi que d'autres qui apparaîtront par la suite sont atteints à l'aide d'un système, tel qu'un système de préparation de commandes ou un système de stockage tampon, comprenant :
- un premier rayonnage et un deuxième rayonnage, ledit premier rayonnage et ledit deuxième rayonnage délimitant une allée ;
- une première paire de montants solidarisée audit premier rayonnage et une deuxième paire de montants solidarisée audit deuxième rayonnage, les montants de ladite première paire de montants étant montés chacun en vis-à-vis d'un montant de ladite deuxième paire de montants ;
- un chariot à guidage automatique présentant au moins deux roues de roulage, destiné à prélever des objets dans au moins un desdits rayonnages, et des moyens de grimpe motorisés aptes à coopérer avec lesdits montants de sorte à permettre audit chariot de s'élever le long desdits montants, lesdits moyens de grimpe comprenant quatre roues dentées destinées chacune à coopérer avec des crémaillères ou des chaînes solidarisées auxdits montants de ladite premier paire et de ladite deuxième paire de montants, chacune des roues dentées étant montée sur un support mobile par rapport au châssis dudit chariot entre deux positions :
- une position déployée, dans laquelle au moins une partie de ladite roue dentée montée sur ledit support fait saillie latéralement hors dudit châssis ;
- une position escamotée, dans laquelle la roue dentée montée sur ledit support est logée dans ou au-dessus dudit châssis.

Selon l'invention, la largeur ou la longueur dudit chariot est inférieure à l'espacement entre les montants de ladite première paire de montant ou de ladite deuxième paire de montants et ledit support mobile est configuré de sorte que, dans ladite position déployée, au moins une partie de chacune desdites roues dentées fait également saillie hors d'un bord dudit châssis faisant face à ladite allée.

Ainsi, de façon inédite et particulièrement astucieuse, l'invention propose de mettre en œuvre des roues dentées qui se déploient à la fois sur les côtés mais aussi sur l'avant ou sur l'arrière du robot pour permettre à un chariot à la fois de grimper sur des rayonnages, mais aussi de pouvoir circuler sous les rayonnages, ce qui permet d'optimiser le trajet des robots, et notamment de réduire la distance parcourue au sol par les robots et d'éviter les risques de conflits de circulation entre deux robots en multipliant significativement les possibilités de parcours alternatifs, et in fine d'augmenter grandement le flux de préparation de commandes dans un entrepôt ou le nombre de marchandises pouvant être stockées, ou déstockées, par heure dans une installation de stockage tampon. En outre, grâce à l'invention, deux chariots peuvent grimper entre le premier rayonnage et le deuxième rayonnage dans des cheminées verticales contiguës, délimitées chacune par une première paire de montants solidarisée au premier rayonnage et par une deuxième paire de montants solidarisée au deuxième rayonnage, en vis-à-vis l'une de l'autre, qui partagent un montant commun pour chaque rayonnage, ce qui permet d'optimiser les flux de circulation des robots

Dans un mode de réalisation particulier de l'invention, dans ladite position déployée, les axes desdites roues dentées forment un angle compris entre 0 et 70° par rapport à une direction perpendiculaire à l'axe de ladite allée et en ce que lesdites crémaillères ou lesdites chaînes sont pivotées du même angle par rapport à une direction perpendiculaire à l'axe de ladite allée.

Dans des variantes de ce mode de réalisation particulier de l'invention, il peut également être envisagé que dans ladite position déployée les axes desdites roues dentées forment un angle compris entre 70 et 90° par rapport à une direction perpendiculaire à l'axe de ladite allée.

Selon un mode de réalisation particulier de l'invention, dans ladite position déployée, les axes desdites roues dentées sont sensiblement perpendiculaires à l'axe de ladite allée.

Dans un mode de réalisation particulier de l'invention, lesdits supports mobiles sont montés pivotants par rapport audit châssis.

Dans un autre mode de réalisation particulier de l'invention, lesdits supports mobiles sont montés coulissants par rapport audit châssis.

Selon un aspect particulier de l'invention, lesdits supports mobiles sont montés sensiblement aux quatre coins du châssis dudit chariot.

Dans un mode de réalisation particulier de l'invention, ledit chariot comprend des moyens de pivotement desdites roues de roulage autour d'un axe vertical sur au moins 90°.

Selon un aspect particulier de l'invention, lesdites crémaillères sont formées monoblocs avec lesdits montants.

Avantageusement, ledit chariot présente des moyens de préhension d'un bac de stockage d'objets.

De préférence, l'étagère inférieure dudit premier rayonnage et/ou dudit deuxième rayonnage est montée à une hauteur supérieure à la hauteur cumulée dudit chariot et d'un bac qu'il porte.

Le robot peut ainsi passer sous les rayonnages avec un bac.

Dans une variante de ce mode de réalisation particulier de l'invention, l'étagère inférieure dudit premier rayonnage et/ou dudit deuxième rayonnage est montée à une hauteur supérieure à la hauteur cumulée dudit chariot et de deux bacs qu'il porte.

Selon un aspect avantageux, un système tel que décrit ci-dessus comprend un troisième rayonnage accolé audit premier rayonnage, du côté opposé à ladite allée, et ledit premier rayonnage et ledit troisième rayonnage présentent une profondeur suffisante pour déposer sur leurs étagères deux bacs de stockage d'objets l'un derrière l'autre.

On peut ainsi grâce à cela créer des aires de dégagement sous les rayonnages, destinées à faciliter le croisement de deux chariots dans le sens de la longueur du rayonnage.

Selon un aspect particulier de l'invention, ledit chariot présente quatre moteurs indépendants destinés chacun à entraîner une desdites roues dentées.

### 5. Liste des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :
- la figure 1est une vue schématique, en perspective, d'un entrepôt équipé d'un exemple de mode de réalisation d'un système de préparation de commandes selon l'invention ;
- la figure 2 est une représentation schématique de détail en perspective du système selon l'invention mis en oeuvre dans l'entrepôt illustré en référence à la figure 1, dans lequel un chariot à guidage automatique positionné dans une allée au pied de deux rayonnages en vis-à-vis ;
- la figure 3 une vue schématique en perspective du chariot présenté en référence à la figure 2 grimpant entre deux rayonnages ;
- la figure 4 est une vue du chariot présenté en référence à la figure 2 portant un bac et pénétrant sous un rayonnage ;
- la figure 5 est une vue de détail en perspective du système présenté en référence à la figure 2, dans lequel trois chariots sont représentés sous deux rayonnages accolés, l'un de ces chariots étant stationné sur une aire de dégagement.

### 6. Description détaillée de l'invention

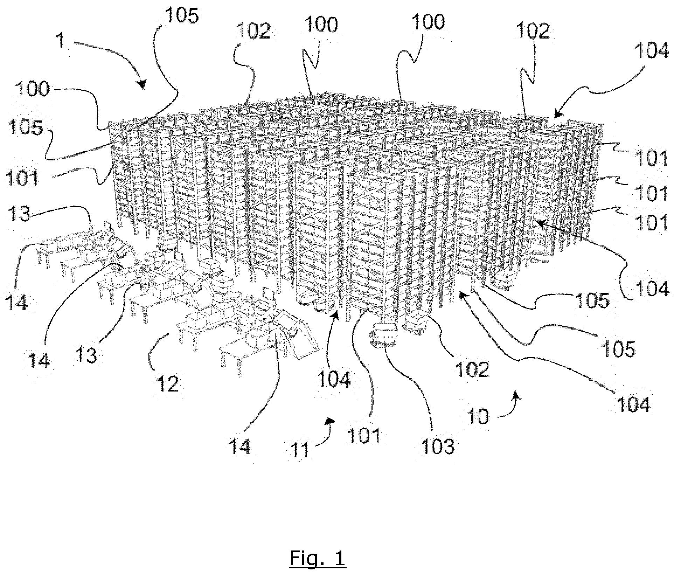

On a illustré sur la figure 1 un entrepôt 1 destiné au stockage de produits en vue de leur expédition. Cet entrepôt est réparti entre une aire de stockage 10 et une zone 11 de préparation de commandes.

Dans la zone de préparation 11 sont disposés des postes de préparation de commandes 12 sur lesquels des opérateurs 13 préparent des colis 14 avec les produits d'une commande.

L'aire de stockage 10 est organisée en rayonnages 100 avec des étagères 101 sur plusieurs niveaux supportées par des montants 105, étagères 101 sur lesquelles sont entreposés des bacs 102 qui contiennent les produits ou articles stockés.

Une flotte de chariots à guidage automatique 103 (« Automatic Guided Vehicle » en anglais) assure le transport des bacs 102 entre l'aire de stockage 10 et les postes de préparation de commandes 12.

Lorsqu'un robot 103 reçoit des informations de localisation d'un bac 102 contenant un ou plusieurs articles à aller prélever pour compléter une commande traitée par l'un des opérateurs 13, le robot 103 roule sur le sol jusqu'au pied du rayonnage 100 où est rangé le bac 102 et se positionne dans l'allée 104 entre ce rayonnage 100 et le rayonnage qui lui fait face. Il grimpe ensuite en prenant appui sur ces deux rayonnages jusqu'à l'étagère 101 où est stocké le bac 102 et l'extrait du rayonnage. Le robot 103 redescend ensuite entre les deux rayonnages, et une fois au sol, transporte le bac 102 jusqu'au poste de préparation de commandes 12 en empruntant les allées et/ou en passant sous les rayonnages. L'opérateur 13 n'a plus qu'à prélever la quantité d'articles commandés et les emballer.

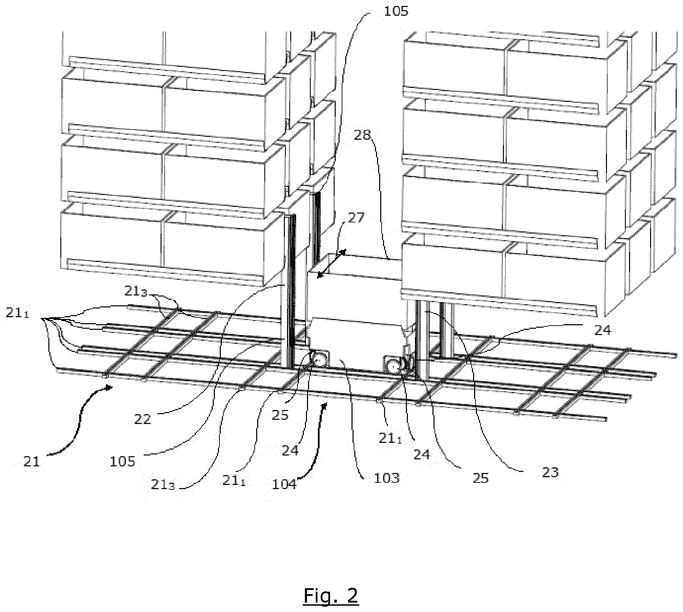

Comme on peut le voir sur la figure 2, dans une vue de détail du robot 103 positionné dans une allée 104 au pied de deux rayonnages 22 et 23, le robot 103 circule au sol sur un réseau 21 de rails formé de rails parallèles 21₁ ou 21₃ orientés dans l'alignement des rayonnages et de rails 21₂ orientés perpendiculairement aux rayonnages. Deux rails 21₁ sont disposés sur les bords de l'allée 104 pour permettre au robot de circuler dans l'allée.

Les rails 21₂ s'étendent sous les rayonnages 22 et 23, entre les pieds des montants 105 de ces derniers, ce qui permet au robot de circuler sous les rayonnages, dans une direction perpendiculaire à l'allée 104. Par ailleurs des rails 21₃ supplémentaires s'étendant parallèlement à l'allée 104 sont également prévus sous les rayonnages entre les pieds des montants 105 pour permettre au robot 103 de circuler sous les rayonnages et dans leur longueur.

Pour circuler sur ces rails 21₁ et 21₂, le robot 103 est équipé, sur chacun de ses quatre côtés, d'une paire de roues 24. Ces paires de roues 24 sont montées chacune sur un support (non représenté sur la figure 2) qui coulisse verticalement actionné par un moteur, ce qui permet de faire reposer sur les rails quatre roues alors que les autres roues sont relevées. En modifiant simplement la sélection des roues devant reposer sur les rails, il est alors possible de faire changer le robot 103 de direction.

Le robot 103 porte ici un bac 28 de longueur et largeur inférieure à celle du châssis 26 du robot.

On notera que la largeur du robot (figurée par la double flèche 27 sur la figure 2) est, dans ce mode de réalisation particulier de l'invention, avantageusement inférieur à l'espacement entre deux montants 105 du rayonnage 22 ou 23 afin de permettre au robot de passer entre ces montants.

Dans une variante de ce mode de réalisation de l'invention, il peut également être prévu que la longueur du robot soit inférieure à l'espacement entre deux montants d'un même rayonnage pour permettre au robot de passer entre les montants lorsqu'il est tourné d'un quart de tour dans l'allée et que son côté le plus long fait face au rayonnage.

On peut également voir sur la figure 2, que le robot 103 est équipé aux quatre coins de son châssis 26 de roues dentées 25 escamotables motorisées, logées dans le châssis 26 dans la position présentée sur la figure 2.

Ces roues dentées 25 sont portées par des bras mobiles motorisés 32 qui peuvent pivoter dans un plan vertical par rapport au châssis, vers le haut, pour déployer les roues dentées 25, ou vers le bas, pour escamoter les roues dentées 25 à l'intérieur du châssis 26.

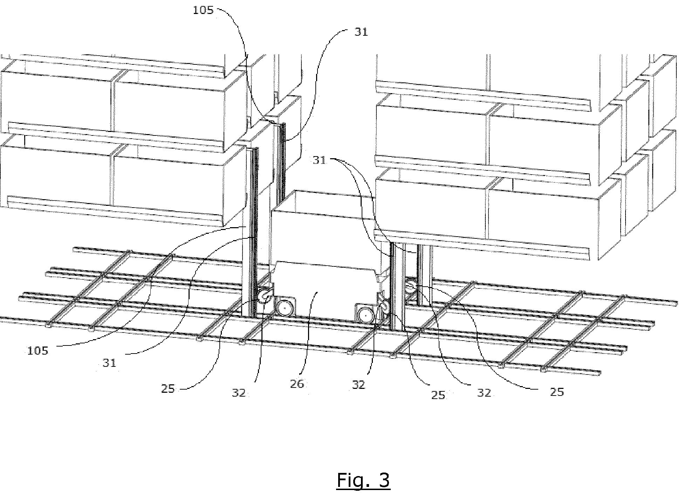

Pour grimper entre les deux rayonnages 22 et 23, le robot 103 déploie, grâce au pivotement des supports 32, les roues dentées 25 hors du châssis 26 dans le prolongement des diagonales du châssis jusqu'à ce que les roues dentées entrent en contact et puisse s'engrener avec des crémaillères 31 fixées sur les montants 105, comme on peut le voir sur la figure 3.

Il convient de noter que, dans ce mode de réalisation particulier de l'invention, les crémaillères 31 sont pivotées par rapport à une direction perpendiculaire à l'axe de l'allée 104 d'un angle de même valeur que l'inclinaison des axes des roues dentées 25 par rapport à une direction perpendiculaire à l'axe de l'allée 104.

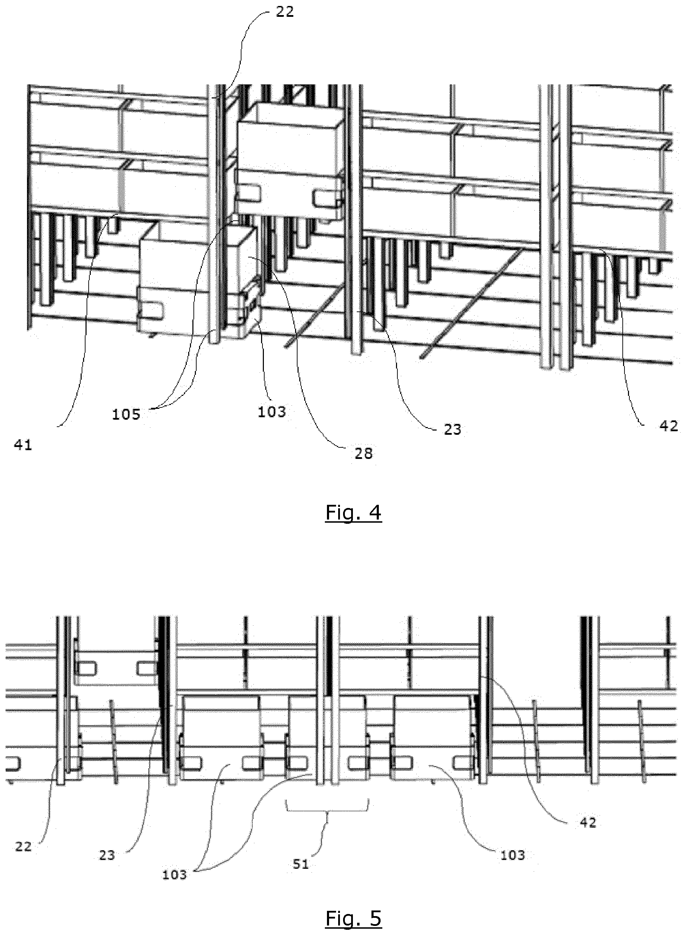

On a illustré sur la figure 4, un robot 103 qui après avoir prélevé un bac dans le rayonnage 23 s'engage sous celui-ci.

Comme on peut le voir sur cette figure, l'étagère inférieure 41 du rayonnage 22 est avantageusement fixée à une hauteur supérieure à la hauteur cumulée du chariot 103 et du bac 28 pour permettre au robot de circuler sous le rayonnage avec le bac 28.

On notera également que dans ce mode de réalisation particulier de l'invention, un troisième rayonnage 42 est accolé au deuxième rayonnage 23, du côté opposé à l'allée 104. Par ailleurs, on observera que la profondeur du rayonnage 23 et du rayonnage 42 a été dimensionnée pour pouvoir poser deux rangées de bacs 28 l'une derrière l'autre sur chacune de leurs étagères. Ceci permet, comme cela est illustré sur la figure 5, de créer des aires de dégagement 51 à cheval sous les deux rayonnages où un robot 103 peut stationner temporairement, ce qui facilite le croisement des robots circulant sous le rayonnage 23 ou le rayonnage 42, dans la longueur de ces rayonnages.

Dans des variantes de ce mode de réalisation particulier de l'invention, il peut également être envisagé de mettre en oeuvre un système tel que décrit ci-dessus pour le stockage tampon de bacs ou de plateaux contenant des produits ou des articles destinés à être livrés à un point de collecte d'un drive, sans sortir du cadre de l'invention.

## Revendications

1. Système, tel qu'un système de préparation de commandes ou un système de stockage tampon, comprenant
- un premier rayonnage (22) et un deuxième rayonnage (23), ledit premier rayonnage et ledit deuxième rayonnage délimitant une allée (104) ;
- une première paire de montants (105) solidarisée audit premier rayonnage (22) et une deuxième paire de montants (105) solidarisée audit deuxième rayonnage (23), les montants de ladite première paire de montants étant montés chacun en vis-à-vis d'un montant de ladite deuxième paire de montants ;
- un chariot à guidage automatique (103) présentant au moins deux roues de roulage (24), destiné à prélever des objets dans au moins un desdits rayonnages (22,23), et des moyens de grimpe motorisés aptes à coopérer avec lesdits montants (105) de sorte à permettre audit chariot (103) de s'élever le long desdits montants (105), lesdits moyens de grimpe comprenant quatre roues dentées (25) destinées chacune à coopérer avec des crémaillères (31) ou des chaînes solidarisées auxdits montants de ladite premier paire et de ladite deuxième paire de montants (105),
chacune des roues dentées (25) étant montée sur un support (32) mobile par rapport au châssis (26) dudit chariot entre deux positions :
- une position déployée, dans laquelle au moins une partie de ladite roue dentée (25) montée sur ledit support (32) fait saillie latéralement hors dudit châssis (26);
- une position escamotée, dans laquelle la roue dentée (25) montée sur ledit support (32) est logée dans ou au-dessus dudit châssis (26),
**caractérisé en ce que** la largeur ou la longueur dudit chariot (103) est inférieure à l'espacement entre les montants (105) de ladite première paire de montant ou de ladite deuxième paire de montants,
et **en ce que** ledit support mobile (32) est configuré de sorte que, dans ladite position déployée, au moins une partie de chacune desdites roues dentées (25) fait également saillie hors d'un bord dudit châssis (26) faisant face à ladite allée (104).

2. Système selon la revendication 1, **caractérisé en ce que**, dans ladite position déployée, les axes desdites roues dentées (25) forment un angle compris entre 0 et 70° par rapport à une direction perpendiculaire à l'axe de ladite allée (104) et **en ce que** lesdites crémaillères (31) ou lesdites chaînes sont pivotées du même angle par rapport à une direction perpendiculaire à l'axe de ladite allée (104).

3. Système selon la revendication 1 ou la revendication 2, **caractérisé en ce que**, dans ladite position déployée, les axes desdites roues dentées (25) sont sensiblement perpendiculaires à l'axe de ladite allée (104).

4. Système selon la revendication 1, **caractérisé en ce que**, dans ladite position déployée, les axes desdites roues dentées (25) forment un angle compris entre 70 et 90° par rapport à une direction perpendiculaire à l'axe de ladite allée.

5. Système selon la revendication 4, **caractérisé en ce que**, dans ladite position déployée, les axes desdites roues dentées (25) forment un angle de 90° par rapport à une direction perpendiculaire à l'axe de ladite allée.

6. Système selon l'une quelconque des revendications 1 à 5, **caractérisé en ce que** lesdits supports mobiles (32) sont montés pivotants par rapport audit châssis (26).

7. Système selon l'une quelconque des revendications 1 à 5, **caractérisé en ce que** lesdits supports mobiles (32) sont montés coulissants par rapport audit châssis (26).

8. Système selon l'une quelconque des revendications 1 à 7, **caractérisé en ce que** lesdits supports mobiles (32) sont montés sensiblement aux quatre coins du châssis (26) dudit chariot.

9. Système selon l'une quelconque des revendications 1 à 8, **caractérisé en ce que** ledit chariot (103) comprend des moyens de pivotement desdites roues de roulage (24) autour d'un axe vertical sur au moins 90°.

10. Système selon l'une quelconque des revendications 1 à 9, **caractérisé en ce que** lesdites crémaillères (31) sont formées monoblocs avec lesdits montants (105).

11. Système selon l'une quelconque des revendications 1 à 10, **caractérisé en ce que** ledit chariot (103) présente des moyens de préhension d'un bac (28) de stockage d'objets.

12. Système selon l'une des revendications 1 à 11, **caractérisé en ce que** l'étagère inférieure (41) dudit premier rayonnage (22) et/ou dudit deuxième rayonnage (23) est montée à une hauteur supérieure à la hauteur cumulée dudit chariot (103) et d'un bac (28) qu'il porte

13. Système selon l'une quelconque des revendications 11 ou 12, **caractérisé en ce qu'**il comprend un troisième rayonnage (42) accolé audit premier rayonnage (22), du côté opposé à ladite allée (104), et **en ce que** ledit premier rayonnage (22) et ledit troisième rayonnage (24) présentent une profondeur suffisante pour déposer sur leurs étagères deux bacs de stockage d'objets l'un derrière l'autre.

14. Système selon l'une quelconque des revendications 1 à 13 **caractérisé en ce que** ledit chariot (103) présente quatre moteurs indépendants destinés chacun à entraîner une desdites roues dentées (25).
